# NEUE EUROPÄISCHE PATENTSCHRIFT

(11) **EP 0 708 999 B2**
(45) Veröffentlichungstag und Bekanntmachung des Hinweises auf die Entscheidung über den Einspruch: **12.11.2003**
(45) Hinweis auf die Patenterteilung: 17.09.1997
(21) Anmeldenummer: 94924258.0
(22) Anmeldetag: 18.07.1994
(51) Int. Cl.: H02K 23/06, B25D 17/00, B60J 7/057

(54) **ANTRIEBSVORRICHTUNG FÜR EIN VERSTELLBARES FAHRZEUGTEIL**
DRIVING DEVICE FOR AN ADJUSTABLE PART OF A VEHICLE
DISPOSITIF D'ENTRAINEMENT D'UNE PARTIE REGLABLE D'UN VEHICULE

(30) Priorität: 16.07.1993 DE 4323946
(43) Veröffentlichungstag der Anmeldung: 01.05.1996
(73) Patentinhaber: WEBASTO KAROSSERIESYSTEME GmbH, D-82131 Stockdorf (DE)
(72) Erfinder: GRUBER, Reinhold, D-87669 Dietringen (DE); VORDERMAIER, Claus, D-81243 München (DE); SCHMIDT, Andreas, D-82131 Gauting (DE)
(74) Vertreter: Schwan, Gerhard, Dipl.-Ing.
(86) Internationale Anmeldenummer: EP9402358
(87) Internationale Veröffentlichungsnummer: WO95002916

(56) Entgegenhaltungen:
- EP-A- 0 252 481
- EP-A- 0 469 286
- EP-A- 0 477 933
- EP-A- 0 538 495
- DE-A- 3 021 948
- DE-A- 3 838 285
- DE-A- 3 930 144
- DE-B- 2 202 443
- US-A- 4 623 764

## Beschreibung

Die Erfindung bezieht sich auf eine Antriebsvorrichtung für ein zwischen Endstellungen verstellbares Teil eines Fahrzeuges, insbesondere für den Deckel eines Fahrzeugdaches, mit einem Elektromotor, der über ein Untersetzungsgetriebe mit einem auf einer Abtriebswelle sitzenden Antriebsritzel verbunden ist, das seinerseits mit dem verstellbaren Teil in Antriebsverbindung steht, sowie mit einer den Motor steuernden, eine Schalteinrichtung aufweisenden elektrischen Schaltungsanordnung zum Stillsetzen des Elektromotors in mindestens einer vorbestimmten Stellung des verstellbaren Teils.

Antriebsvorrichtungen dieser Art sind in unterschiedlichen Ausführungsformen bekannt. Bei einer bekannten Ausführungsform (EP 0 351 280 A1 und DE 28 38 678 A1) sind der Elektromotor, das Untersetzungsgetriebe und die elektrische Schaltungsanordnung samt Schalteinrichtung in einem gemeinsamen Gehäuse untergebracht. Bei anderen bekannten Ausführungsformen (DE 29 14 864 C3 und EP 0 477 933 A1) ist der Elektromotor an ein das Untersetzungsgetriebe und die elektrische Schaltungsanordnung samt Schalteinrichtung aufnehmendes Gehäuse angeflanscht, wobei im Falle der Lösung nach der EP 0 477 933 A1 noch ein außerhalb des Gehäuses verlegter Kabelbaum vorhanden ist, über den die elektrische Schaltungsanordnung mit den Motorklemmen verbunden ist.

Bei einer aus der EP-A-0 252 481 bekannten Antriebsvorrichtung nimmt ein Gehäuseteil aus einer Aluminiumlegierung ein Untersetzungsgetriebe auf, während eine elektronische Schaltungsanordnung in einem mit diesem lösbar verbundenen Deckel aus gestanztem Blech angeordnet ist.

In der Praxis wird die den Elektromotor steuernde elektrische Schaltungsanordnung in unterschiedlichen Varianten ausgelegt, die an die jeweiligen Anforderungen des betreffenden Fahrzeugtyps angepaßt sind und die mehr oder weniger kompliziert ausgelegt und damit aus mehr oder weniger vielen Bauteilen, u. a. auch Relais, aufgebaut sein können. Beispielsweise hängt die Auslegung der Steuerschaltung von der Anzahl der anzufahrenden Stellungen des verstellbaren Fahrzeugteils sowie davon ab, ob und welche Zusatzfunktionen vorgesehen sind, wie beispielsweise selbsttätiges Betätigen des verstellbaren Fahrzeugteils in Abhängigkeit von der Fahrgeschwindigkeit des Fahrzeugs, Ankopplung der Steuerschaltung an das Zündschloß und/oder eine Zentralverriegelung und dergleichen. Für diese unterschiedlichen Auslegungsvarianten mußten bisher entsprechend angepaßte und damit unterschiedlich gestaltete Gehäuse vorgesehen werden, oder das Gehäuse wurde so bemessen, daß es auch die Steuerschaltungsvariante mit den meisten und/oder platzraubendsten Komponenten, z.B. die die meisten Relais erfordernde Variante, aufnehmen konnte. Die zuerst genannten Vorgehensweise erfordert eine Palette von relativ aufwendigen Gehäusen, verbunden mit relativ hohen Werkzeugkosten für die Gehäusefertigung, zumal solche Gehäuse aus Stabilitätsgründen in der Regel aus Metall, insbesondere Druckguß, gefertigt sind. Bei dem zweiten Lösungsweg ist das Gehäuse beim Einsatz für einfachere Schaltungsvarianten zwangsläufig unnötig groß und schwer, was gerade im Fahrzeugbau einen wesentlichen Nachteil darstellt.

Der Erfindung liegt die Aufgabe zugrunde, eine Antriebsvorrichtung der eingangs genannten Art zu schaffen, die eine einfache, kostensparende Anpassung des Gehäuses an unterschiedliche Varianten der Steuerschaltung erlaubt, und die es insbesondere ermöglicht, mit geringem Aufwand die Gehäuseabmessungen auf die im Einzelfall notwendigen Werte zu beschränken.

Diese Aufgabe wird erfindungsgemäß durch eine Merkmalskombination des Anspruchs 1 gelöst.

Bei der Antriebsvorrichtung nach der Erfindung kann für alle Varianten das gleiche Getriebegehäuseteil vorgesehen werden, während das Elektrogehäuseteil in Anpassung an die jeweilige Variante der Steuerschaltung ausgelegt und bemessen ist. Durch Zusammenfügen des gleichbleibenden Getriebegehäuseteils und des auf die jeweilige Steuerschaltungsvariante zugeschnittenen Elektrogehäuseteils kann infolgedessen einfach und kostensparend eine an die jeweiligen Bedürfnisse optimal angepaßte Gesamtanordnung erhalten werden. Das als Metalldruckgußteil ausgebildete Getriebegehäuseteil hat eine relativ hohe Stabilität, selbst wenn aus Platzgründen seine Abmessungen minimiert werden. Das als Kunststoffspritzteil gefertigte Elektrogehäuseteil kann besonders leicht gehalten werden; die Gesamtgehäusekosten bleiben verhältnismäßig niedrig.

Der Elektromotor kann an das Getriebegehäuseteil angeflanscht sein. Gegebenenfalls kann die Auslegung aber auch so getroffen sein, daß das Getriebegehäuseteil zur zusätzlichen Aufnahme des Elektromotors dient.

Befestigungselemente zum Anbringen der Antriebsvorrichtung am Fahrzeug oder einem das verstellbare Teil abstützenden, fahrzeugfest angebrachten Teil, z.b. einem Dachrahmen, sind vorteilhaft nur an dem in der Regel relativ stabil ausgelegten Getriebegehäuseteil vorgesehen, das dann seinerseits das Elektrogehäuseteil trägt.

Der gemeinsame Gehäusedeckel für das Getriebegehäusteil und das Elektrogehäuseteil wird zweckmäßig mit dem Getriebegehäuseteil und dem Elektrogehäuseteil verclipst.

Zum lösbaren gegenseitigen Verbinden des Getriebegehäuseteils und des Elektrogehäuseteils sind in weiterer Ausgestaltung der Erfindung an diesen Gehäuseteilen Steckverbindungsteile vorgesehen, insbesondere angeformt. Dabei kann sich vorteilhaft mindestens eines der Steckverbindungsteile des Getriebegehäuseteils zur Abstützung des Elektrogehäuseteils gegen mindestens eine Seiten- und/oder Stirnwand des Elektrogehäuseteils von innen großflächig anlegen.

Mindestens ein Teil der Schaltungskomponenten der elektrischen Schaltungsanordnung ist vorteilhaft auf einer elektrischen Leiterplatte montiert, die ihrerseits mit dem Elektrogehäuseteil, vorzugsweise über Steckverbindungsteile, lösbar verbunden ist. In weiterer Ausgestaltung der Erfindung kann die elektrische Schaltungsanordnung mit Anschlußklemmen des Elektromotors über steckbare Kontakte lösbar verbunden sein, wobei die steckbaren Kontakte für die Stromversorgung des Elektromotors vorteilhaft an der Leiterplatte befestigt sind. Dadurch läßt sich die Steuerschaltung mit dem Elektromotor verbinden und im Bedarfsfall auch austauschen, ohne daß z.B. Lötarbeiten notwendig werden.

Die Leiterplatte kann außerdem mindestens eine Buchse zur Steckverbindung der elektrischen Schaltungsanordnung mit externen Baugruppen tragen.

Wenn in an sich bekannter Weise (z.B. EP 0 469 286 A2) zum Betätigen der Schalteinrichtung ein Schaltrad vorgesehen ist, das beim Verstellen des Fahrzeugteils zwischen seinen Endstellungen über ein Exzenterzahnrädergetriebe zu einer Drehbewegung von weniger als 360° veranlaßt wird, ist das Schaltrad zusammen mit dem Exzenterzahnrädergetriebe zweckmäßig gleichfalls in dem Elektrogehäuseteil untergebracht, obwohl es grundsätzlich auch möglich ist, Schaltrad und Exzenterzahnrädergetriebe dem Getriebegehäuseteil zuzuordnen.

Bevorzugte Ausführungsbeispiele der Antriebsvorrichtung nach der Erfindung sind nachstehend anhand der Zeichnungen näher erläutert. Es zeigen:
- Fig. 1: einen schematischen Längsschnitt eines Fahrzeug-Schiebedaches bei in Schließstellung stehendem Deckel,
- Fig. 2: einen Schnitt entsprechend Fig. 1 bei in die Offenstellung gebrachtem Deckel,
- Fig.3: eine auseinandergezogene perspektivische Darstellung der Antriebsvorrichtung des Fahrzeugdaches nach den Fign. 1 und 2,
- Fig. 4: eine Draufsicht auf die Antriebsvorrichtung gemäß Fig. 3,
- Fig. 5: eine Stirnansicht der Antriebsvorrichtung gemäß Fig. 4,
- Fig. 6: ein Prinzipschaltbild der zu der Antriebsvorrichtung führenden Anschlußanordnung,
- Fign. 7 bis 9: Darstellungen entsprechend den Fign. 4 bis 6 für zwei abgewandelte und 10 bis 12 Ausführungsformen, und
- Fig. 13: eine Rückansicht der Antriebsvorrichtung gemäß Fig. 10.

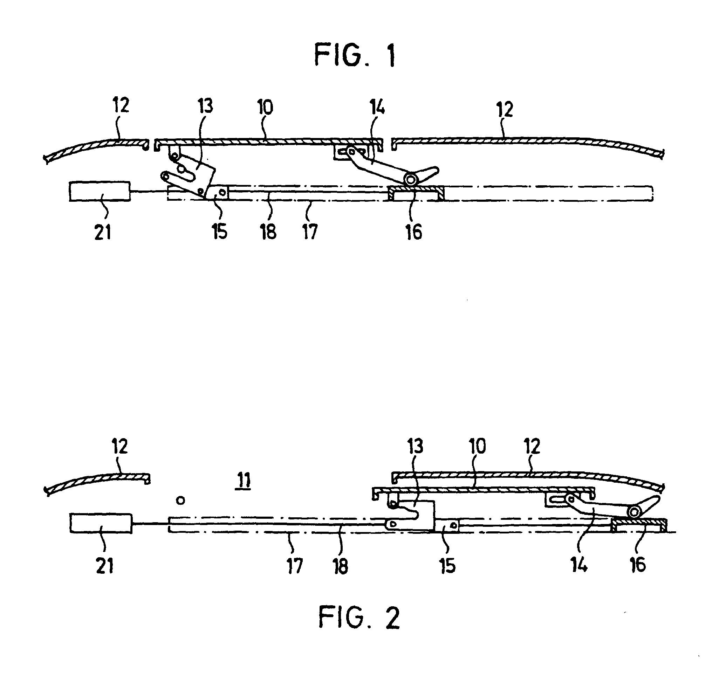

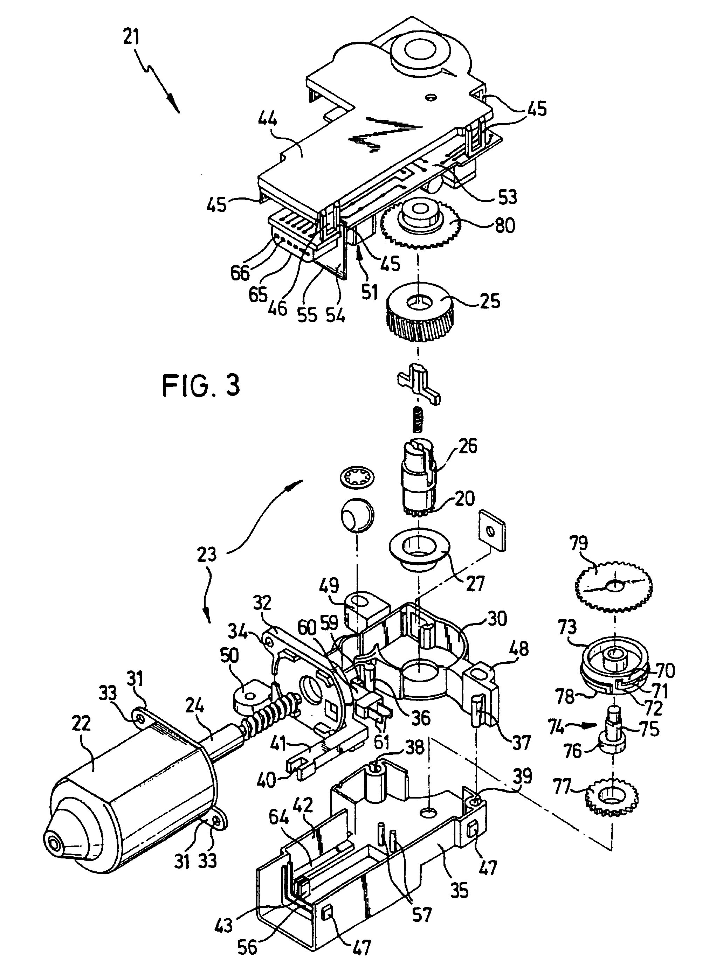

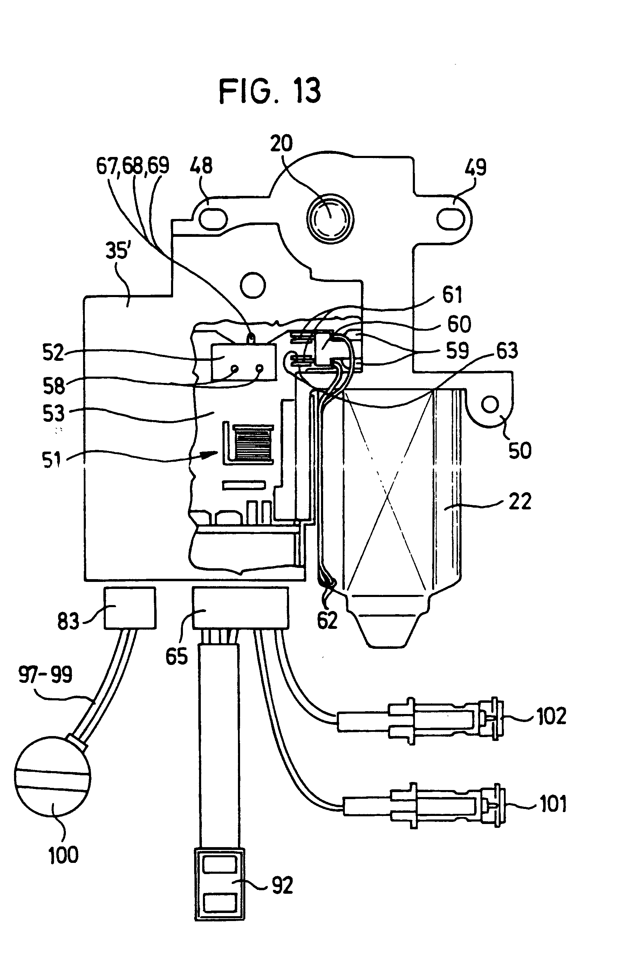

Das in den Fign. 1 und 2 veranschaulichte Fahrzeug-Schiebedach weist einen Deckel 10 auf, der in einer Schließstellung (Fig. 1) eine Dachöffnung 11 verschließt, die in einer festen Dachfläche 12 ausgebildet ist. Der Deckel 10 ist an beiden Seiten auf jeweils einem vorderen Deckelträger 13 und einem hinteren Deckelträger 14 abgestützt. Die Deckelträger 13 und 14 sind an einem vorderen Schlitten 15 bzw. einem hinteren Schlitten 16 angelenkt, die beide entlang einer dachfesten Längsführung 17 in Fahrzeuglängsrichtung verschiebbar geführt sind. Dabei greift an dem rechten und dem linken hinteren Schlitten 16 jeweils ein Antriebskabel 18, vorzugsweise ein Gewindekabel, an. Die Antriebskabel 18 wirken mit einem Antriebsritzel 20 (Fign. 3 und 13) einer insgesamt mit 21 bezeichneten Antriebsvorrichtung zusammen. Die Längsführungen 17 können Teil eines Dachrahmens sein oder an einem Dachrahmen abgestützt sein.

Das Antriebsritzel 20 wird von einem Elektromotor 22 über ein Untersetzungsgetriebe 23 angetrieben. Zu dem Untersetzungsgetriebe 23 gehören eine von dem Motor 22 vorzugsweise direkt angetriebene Schneckenwelle 24 und ein mit der Schneckenwelle 24 kämmendes Schneckenrad 25. Das Schneckenrad 25 ist im veranschaulichten Ausführungsbeispiel mit einer Welle 26 drehfest verbunden, die zugleich in drehfester Verbindung mit dem Antriebsritzel 20 steht und damit die Abtriebswelle der Antriebsvorrichtung 21 bildet. Die Welle 26 ist über eine Lagerbuchse 27 in einem Getriebegehäuseteil 30 gelagert, an welchem der Elektromotor 22 angeflanscht ist. Für diesen Zweck sind der Elektromotor 22 und das Getriebegehäuseteil 30 mit Flanschelementen 31 bzw. 32 ausgestattet, in denen Öffnungen 33 bzw. 34 ausgebildet sind, die im zusammenmontierten Zustand paarweise miteinander fluchten und durch die entsprechende Befestigungselemente, beispielsweise Schrauben, hindurchreichen können. Das Getriebegehäuseteil 30 ist als Metalldruckgußteil ausgebildet. Ein Elektrogehäuseteil 35, in Form eines Kunststoffspritzteils ist mit dem Getriebegehäuseteil 30 lösbar verbunden. Für diesen Zweck sind an den Gehäuseteilen 30 und 35 Steckverbindungsteile angeformt. Bei der veranschaulichten Ausführungsform gehören zu diesen Steckverbindungsteilen zwei von dem Getriebegehäuseteil 30 vorspringende Zungen 36 und 37, die in Aufnahmen 38, 39 des Elektrogehäuseteils 35 einsteckbar sind. Des weiteren ist an dem Getriebegehäuseteil 30 ein an seinem freien Ende mit einer Aufnahme 40 versehener Arm 41 angeformt, während benachbart der Innenseite einer Seitenwand 42 des Elektrogehäuseteils 35 zwei mit dem Gehäuseteil 35 verbundene federnde Zungen 43 vorgesehen sind, die sich beim Zusammenstecken der Gehäuseteile 30 und 35 in die Aufnahme 40 einlegen. Wenn die Gehäuseteile 30, 35 zusammengesteckt sind, legt sich der Arm 41 gegen einen stufenförmigen Absatz 64 des Elekgrogehäuseteils 35 und gegen die Innenseite der Seitenwand 42 großflächig an, wodurch eine besonders stabile Abstützung des Elektrogehäuseteils 35 sichergestellt wird.

Das Getriebegehäuseteil 30 und das Elektrogehäuseteil 35 sind mittels eines gemeinsamen Deckels 44 abgedeckt. Der Deckel 44 ist mit den Gehäuseteilen 30 lösbar verbunden. Für diesen Zweck sind an dem zweckmäßig als Kunststoffspritzteil ausgebildeten Dekkel 44 federnd auslenkbare Zungen 45 angeformt, die jeweils mit einer Ausnehmung 46 versehen sind. In die Ausnehmungen 46 können sich Nasen 47 einlegen, die an der Außenseite des Getriebegehäuseteils 30 und des Elektrogehäuseteils 35 sitzen.

Das Getriebegehäuseteil 30 weist ferner drei Befestigungselemente 48, 49 und 50 auf, die für eine Dreipunktabstützung der gesamten Antriebsvorrichtung 21 an dem Fahrzeug genutzt werden.

Das Elektrogehäuseteil 35 dient der Aufnahme einer insgesamt bei 51 angedeuteten elektrischen Schaltungsanordnung, zu der insbesondere eine den Elektromotor 22 steuernde Schalteinrichtung 52 gehört. Mindestens ein Teil der Schaltungskomponente der elektrischen Schaltungsanordnung 51 einschließlich der Schalteinrichtung 52 sind auf einer gedruckten elektrischen Leiterplatte (Platine) 53 montiert, die ihrerseits mit dem Elektrogehäuseteil 35 lösbar verbunden ist. Für die gegenseitige Verbindung von Leiterplatte und Elektrogehäuseteil 35 sind vorzugsweise Steckverbindungsteile vorgesehen. Für diesen Zweck ist am einen Ende der Leiterplatte 53 ein zu der Leiterplatte senkrecht stehendes Stirnwandteil 54 angebracht, das eine Zunge 55 bildet, die in eine U-förmige Aufnahme an der einen Stirnseite des Elektrogehäuseteils 35 einsteckbar ist. Zusätzliche Steckverbindungsteile können bedarfsweise vorgesehen sein, beispielsweise an dem Elektrogehäuseteil 35 angespritzte Stifte 57, die in komplementäre Ausnehmungen 58 in der Leiterplatte 53 oder damit fest verbundenen Bauteilen, beispielsweise der Schalteinrichtung 52, eingreifen können (Fign. 3 und 13).

In eine an dem Getriebegehäuseteil 30 angeformte Aufnahme 59 ist ein Steckerkontaktträger 60 mit zwei vorstehenden Steckerkontakten 61 eingesetzt, die mit Anschlußklemmen 62 des Elektromotors 22 in leitender Verbindung stehen (Fig. 13). An der Leiterplatte 53 sind federnd auslenkbare Buchsenkontakte 63 befestigt, zwischen die sich die Steckerkontakte 61 einlegen, wenn die Leiterplatte 53 mit dem an dem Getriebegehäuseteil 30 lösbar angebrachten Elektrogehäuseteil 35 in Verbindung gebracht wird. Auf diese Weise wird für eine Steckverbindung zwischen den Motoranschlußklemmen 62 und der elektrischen Schaltungsanordnung 51 gesorgt. Eine Buchse 65 ist an der Leiterplatte 53 angebracht und mit Buchsenkontakten 66 versehen, die an die Schaltungsanordnung 51 angeschlossen sind. Beispielsweise kann die Buchse 65 ein Buchsengehäuse aufweisen, das mit dem Stirnwandteil 54 in einstückiger Verbindung steht. Über die Buchse 65 erfolgt eine Steckverbindung der elektrischen Schaltungsanordnung 51 mit externen Baugruppen, beispielsweise einer Stromversorgung, Tastem, der Zentralverriegelung, einem Tachosignalgeber und dergleichen. Der Aufbau der elektrischen Schaltungsanordnung und deren Verbindung mit externen Baugruppen können in an sich bekannter Weise gestaltet sein (vergleiche beispielshalber EP 0 477 933 A1, DE 38 29 405 A1, DE 38 30 555 A1, DE 39 30 053 A1 und DE 33 24 107 A1) und bedürfen daher vorliegend keiner näheren Erläuterung.

Bei der in den Fign. 3 und 13 veranschaulichten Ausführungsform der Antriebsvorrichtung 21 weist die Schalteinrichtung 52 drei übereinanderliegende Schalter auf, deren Betätigungsglieder bei 67, 68 und 69 angedeutet sind. Die Betätigungsglieder 67, 68 und 69 wirken mit jeweils einer von drei in Axialrichtung gegeneinander versetzten Nockenbahnen 70, 71 bzw. 72 am Außenumfang eines Schaltrades 73 zusammen, um den Deckel 10 selbsttätig stillzusetzen, wenn er vorbestimmte Stellungen, beispielsweise die eine oder die andere Endstellung gemäß den Fign. 1 und 2, erreicht.

Bei einem Übergang des Deckels 10 von der einen in die andere Endstellung führt das Schneckenrad 25 mehrere Umdrehungen aus. Die jeweilige Drehstellung des Schnekkenrades 25 ist daher zur eindeutigen Erfassung der Deckelstellung ungeeignet. Um eine solche eindeutige Zuordnung zu erhalten, ist zwischen dem Schneckenrad 25 bzw. der Welle 26 und dem Schaltrad 73 ein insgesamt mit 74 bezeichnetes Exzenterzahnrädergetriebe vorgesehen, das so ausgelegt ist, daß das Schaltrad 73 im Zuge einer Verstellbewegung des Dekkels 10 von der einen in die andere Endstellung zu einer Drehbewegung von weniger als 360° veranlaßt wird.

Zu dem Exzenterzahnrädergetriebe 74 gehören eine Welle 75, ein damit drehfest verbundener Exzenter 76, ein außenverzahntes Innenrad 77 und ein damit in Kämmeingriff stehendes innenverzahntes Außenrad 78. Auf dem Exzenter 76 ist das ringförmige Innenrad 77 drehbar gelagert. Das Außenrad 78 ist mit dem Schaltrad 73 drehfest verbunden. Das Innenrad 77 wird an einer Umlaufbewegung gegenüber dem Außenrad 78 gehindert, kann jedoch eine hin und hergehende Bewegung entlang einer Verstellachse ausführen, der eine Taumelbewegung überlagert ist. Mit der Welle 75 ist ferner ein Zahnrad 79 drehfest verbunden. Das Zahnrad 79 steht in Kämmeingriff mit einem mit der Welle 26 verbundenen Zahnrad 80. Nähere Einzelheiten bezüglich des Aufbaus und der Funktionsweise des Exzenterzahnrädergetriebes 74 sind der DE-Patentanmeldung P 43 23 945 zu entnehmen und stellen keinen Teil der vorliegenden Erfindung dar.

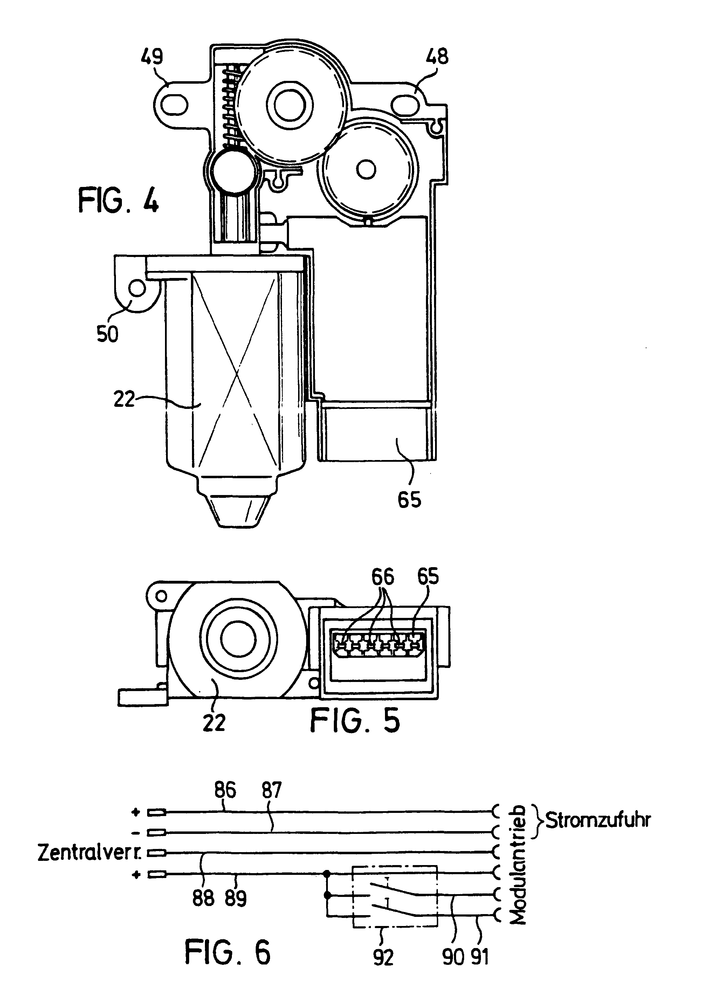

Bei der Ausführungsform gemäß den Fign. 4 bis 6 umfaßt die mit den Buchsenkontakten 66 der Buchse 65 zu verbindende Anschlußanordnung zwei Stromzufuhrleitungen 86 und 87, eine mit einer Zentralverriegelung des Fahrzeuges verbundene Leitung 88 sowie Leitungen 89 bis 91 für den Anschluß eines Tasters 92. Durch die Verbindung der Antriebsvorrichtung mit der Zentralverriegelung kann erreicht werden, daß der Dekkel 10 beim Verschließen des Fahrzeuges selbsttätig in die Schließstellung fährt. Über den Taster 92 wird der Deckel 10 von Hand beliebig verstellt. Dabei führt der die Leitung 89 einschließende Stromkreis über das (nicht veranschaulichte) Zündschloß des Fahrzeuges, so daß ein Öffnen des Deckels erst nach Einschalten der Zündung möglich wird.

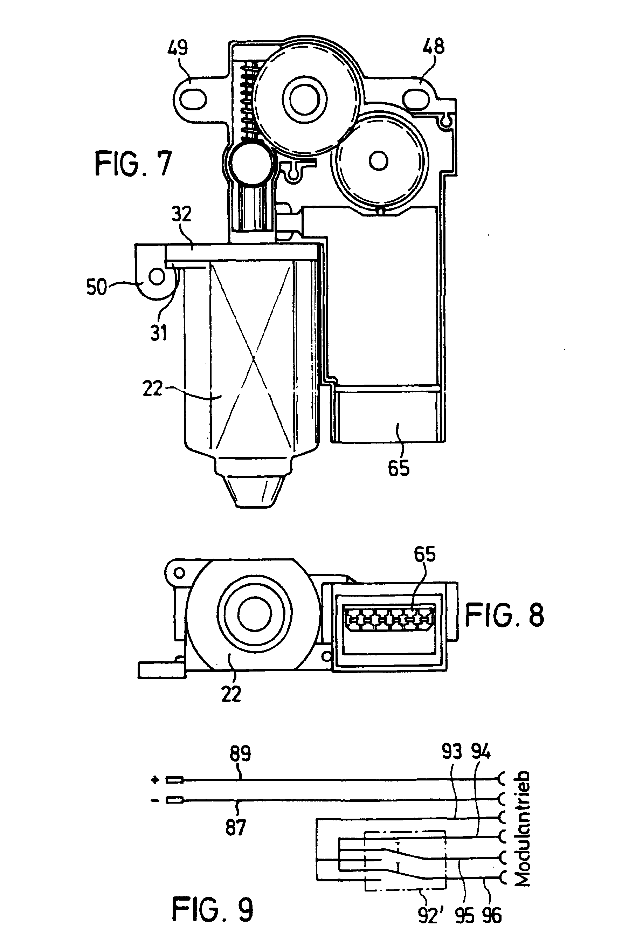

Im Falle der abgewandelten Ausführungsform gemäß den Fign. 7 bis 9 erfolgt die Stromzufuhr zu der Deckel-Antriebsvorrichtung über die Leitungen 87 und 89. Ein als zweipoliger Umschalter ausgebildeter Taster 92' ist mit der Schaltungsanordnung 51 über Leitungen 93, 94, 95 und 96 verbunden.

Die Ausführungsformen nach den Fign. 3 bis 9 sind mit dem gleichen Elektrogehäuseteil 35 und entsprechend auch mit dem gleichen Gehäusedeckel 44 ausgestattet.

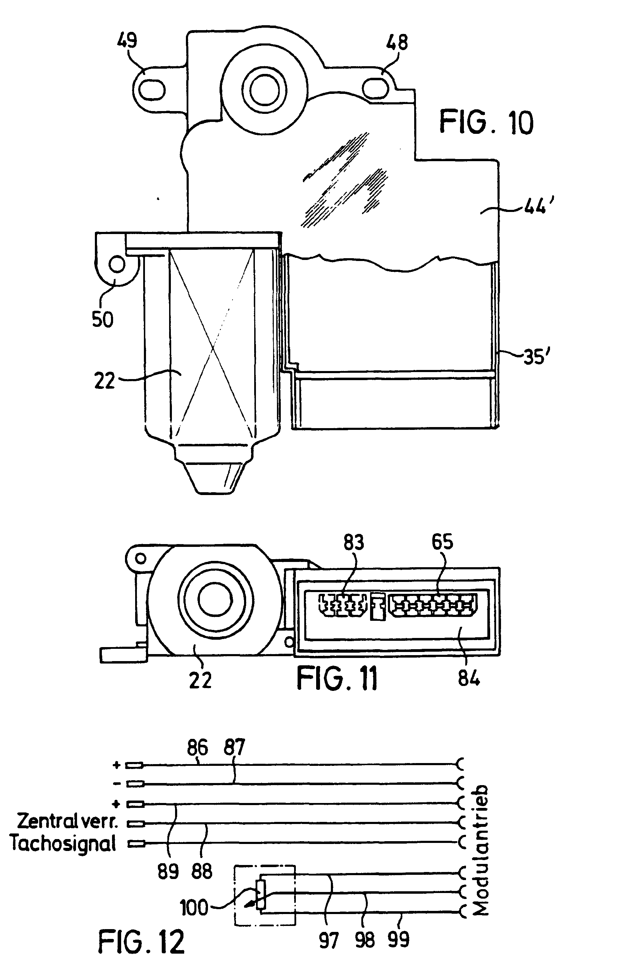

Die Ausführungsform nach den Fign. 10 bis 13 ist für den Einsatz einer Positionsautomatik bestimmt, wie sie beispielsweise aus der DE 33 24 107 A1 bekannt ist. Bei einer solchen Positionsautomatik ist ein Sollwertgeber für die Stellung des Deckels 10 vorgesehen, und die Antriebsvorrichtung des Deckels ist als Teil eines Regelkreises ausgebildet, welcher die am Sollwertgeber gewählte Stellung mit der jeweiligen Iststellung des Deckels vergleicht und den Deckel verstellt, bis die Regelabweichung zu Null geworden ist.

Entsprechend Fig. 12 sind Leitungen 97, 98 und 99 vorgesehen, die an den Positions-Sollwertgeber 100 angeschlossen sind, der beispielsweise in Form eines Potentiometers vorliegt. Die Leitungen 97 bis 99 führen zu einer zweiten Buchse 83 (Fig. 11), die zusammen mit der Buchse 65 in einem gemeinsamen Buchsengehäuse 84 untergebracht ist. Zusätzlich können gegebenenfalls Anschlüsse an einen Taster, beispielsweise den Taster 92, vorgesehen sein.

In Fig. 13 sind außer dem Taster 92 und dem Positions-Sollwertgeber 100 das Zündschluß 101 und die Zentralverriegelung 102 angedeutet.

Weil bei der Ausführungsform gemäß den Fign. 10 bis 13 die elektrische Schaltungsanordnung komplexer ausgebildet ist und dementsprechend einen größeren Platzbedarf hat, ist an das unverändert beibehaltene Getriebegehäuseteil 30 ein Elektrogehäuseteil 35 angekoppelt, das eine größere Breite als das Elektrogehäuseteil 35 hat. Entsprechend ist auch ein breiterer Gehäusedeckel 44' vorgesehen.

Es versteht sich, daß die Erfindung nicht auf die beschriebenen Ausführungsbeispiele beschränkt ist. Beispielsweise kann es sich bei dem verstellbaren Fahrzeugteil um ein Fahrzeugseitenfenster handeln. Die mit dem Getriebegehäuseteil lösbar verbundenen Elektrogehäuseteile können sich nicht nur hinsichtlich ihrer Breite, sondern gegebenenfalls auch hinsichtlich ihrer Länge und/oder Höhe unterscheiden.

## Patentansprüche

1. Antriebsvorrichtung für ein zwischen Endstellungen verstellbares Teil eines Fahrzeugs, insbesondere für den Deckel (10) eines Fahrzeugdaches, mit einem Elektromotor (22), der über ein Untersetzungsgetriebe (23) mit einem auf einer Abtriebswelle (26) sitzenden Antriebsritzel (20) verbunden ist, das seinerseits mit dem verstellbaren Teil in Antriebsverbindung steht, sowie mit einer den Elektromotor steuernden, eine Schalteinrichtung (52) aufweisenden elektrischen Schaltungsanordnung (51) zum Stillsetzen des Elektromotors (22) in mindestens einer vorbestimmten Stellung des verstellbaren Teils, **dadurch gekennzeichnet, daß** das Untersetzungsgetriebe (23) und die elektrische Schaltungsanordnung (51) jeweils in einem gesonderten Getriebegehäuseteil (30) bzw. Elektrogehäuseteil (35, 35') untergebracht sind, die ihrerseits miteinander lösbar verbunden und mittels eines gemeinsamen Gehäusedeckels (44, 44') abdeckbar sind, wobei das Getriebegehäuseteil (30) als Metalldruckgußteil und das Elektrogehäuseteil (35, 35') als Kunststoffspritzteil ausgebildet ist.

2. Antriebsvorrichtung nach Anspruch 1, **dadurch gekennzeichnet, daß** der Elektromotor (22) an das Getriebegehäuseteil (30) angeflanscht ist.

3. Antriebsvorrichtung nach einem der vorhergehenden Ansprüche, **dadurch gekennzeichnet, daß** Befestigungselemente (48, 49, 50) zum Anbringen der Antriebsvorrichtung (21) am Fahrzeug oder einem das verstellbare Teil abstützenden, fahrzeugfest angebrachten Teil nur an dem Getriebegehäuseteil (30) vorgesehen sind.

4. Antriebsvorrichtung nach einem der vorhergehenden Ansprüche, **dadurch gekennzeichnet, daß** der Gehäusedeckel (44, 44') mit dem Getriebegehäuseteil (30) und dem Elektrogehäuseteil (35, 35') lösbar verbunden, insbesondere verclipst, ist.

5. Antriebsvorrichtung nach Anspruch 4, **dadurch gekennzeichnet, daß** der Gehäusedeckel (44, 44') federnd auslenkbare Zungen (45) trägt, die mit Gegenhaltern (Nasen 47) des Getriebegehäuseteils (30) und des Elektrogehäuseteils (35, 35') in Rastverbindung bringbar sind.

6. Antriebsvorrichtung nach einem der vorhergehenden Ansprüche, **dadurch gekennzeichnet, daß** zum lösbaren gegenseitigen Verbinden des Getriebegehäuseteils (30) und des Elektrogehäuseteils (35, 35') an diesen Steckverbindungsteile (Zungen 36, 37, 43; Aufnahmen 38, 39, 40, Arm 41) vorgesehen, insbesondere angeformt, sind.

7. Antriebsvorrichtung nach Anspruch 6, **dadurch gekennzeichnet, daß** sich mindestens eines der Steckverbindungsteile (Arm 41) des Getriebegehäuseteils (30) zur Abstützung des Elektrogehäuseteils (35, 35') gegen mindestens eine Seiten- und/oder Stirnwand (42, Absatz 64) des Elektrogehäuseteils von innen großflächig anlegt.

8. Antriebsvorrichtung nach einem der vorhergehenden Ansprüche, **dadurch gekennzeichnet, daß** mindestens ein Teil der Schaltungskomponenten der elektrischen Schaltungsanordnung (51) auf einer elektrischen Leiterplatte (53) montiert ist, die ihrerseits mit dem Elektrogehäuseteil (35, 35'), vorzugsweise über Stectverbindungsteile (Zunge 55, Aufnahme 56, Stifte 57, Ausnehmungen 58), lösbar verbunden ist.

9. Antriebsvorrichtung nach einem der vorhergehenden Ansprüche, **dadurch gekennzeichnet, daß** die elektrische Schaltungsanordnung (51) mit Anschlußklemmen (62) des Elektromotors (22) über steckbare Kontaktpaare (Steckerkontakte 61, Buchsenkontakte 63) lösbar verbunden ist.

10. Antriebsvorrichtung nach Ansprüchen 8 und 9, **dadurch gekennzeichnet, daß** jeweils einer der Kontakte (Buchsenkontakte 63) der steckbaren Kontaktpaare für die Stromversorgung des Elektromotors (22) an der Leiterplatte (53) befestigt ist.

11. Antriebsvorrichtung nach einem der Ansprüche 8 bis 10, **dadurch gekennzeichnet, daß** die Leiterplatte (53) mindestens eine Buchse (65, 83, 84) zur Steckverbindung der elektrischen Schaltungsanordnung (51) mit externen Baugruppen trägt.

12. Antriebsvorrichtung nach einem der vorhergehenden Ansprüche, **dadurch gekennzeichnet, daß** zum Betätigen der Schalteinrichtung (52) ein Schaltrad (73) vorgesehen ist, das beim Verstellen des Teils (10) zwischen seinen Endstellungen über ein Exzenterzahnrädergetriebe (74) zu einer Drehbewegung von weniger als 360° veranlaßt wird, und daß das Schaltrad (73) zusammen mit dem Exzenterzahnrädergetriebe (74) gleichfalls in dem Elektrogehäuseteil (35, 35') untergebracht ist.

## Claims

1. A drive device for a part of a vehicle which is displaceable between extreme positions, particularly for the cover (10) of a vehicle roof, with an electric motor (22) which is connected by a reduction gearing (23) to a drive pinion (20) mounted on an output shaft (26) and which is in turn drive-connected to the displaceable part and with, controlling the motor, an electrical circuit arrangement (51) comprising switching means (52) for switching off the electric motor (22) in at least one predetermined position of the displaceable part, **characterised in that** the reduction gearing (23) and the electrical circuit arrangement (51) each are accommodated in a separate gear housing part (30) and an electric housing part (35,35'), respectively, which are separably connected to each other and are adapted to be covered by a common housing cover (44,44'), the gear housing part (30) being constructed as a metal diecast part while the electric housing part (35,35') is constructed as a plastic injection moulded part.

2. A drive device according to Claim 1, **characterised in that** the electric motor (22) is flanged onto the gear housing part (30).

3. A drive device according to one of the preceding Claims, **characterised in that** fixing elements (48,49,50) for mounting the drive device (21) on the vehicle or a part mounted rigid with the vehicle on which the displaceable part has to be supported are only provided on the gear housing part (30).

4. A drive device according to one of the preceding Claims, **characterised in that** the housing cover (44,44') is separably connected, and is in particular clipped, to the gear housing part (30) and the electric housing part (35,35').

5. A drive device according to Claim 4, **characterised in that** the housing cover (44,44') carries resiliently deflectable taps (45) adapted to be brought into a catch connection with counter-stays (noses 47) on the gear housing part (30) and electric housing part (35,35').

6. A drive device according to one of the preceding Claims, **characterised in that**, for separably connecting the gear housing part (30) and the electric housing part (35,35'), plug-in connection parts (tongues 36,37,43; housings 38,39,40, arm 41) are provided and are in particular integrally formed.

7. A drive device according to Claim 6, **characterised in that** for bracing the electric housing part (35,35'), at least one of the plug-in connection parts (arm 41) of the gear housing (30) has a large area resting against the inside of at least one side and/or end wall (42, step 64) of the electric housing part.

8. A drive device according to one of the preceding Claims, **characterised in that** at least one part of the switching components of the electrical circuit arrangement (51) is mounted on an electrical circuit board (53) which is in turn separably connected to the electric housing part (35,35'), preferably by means of plug-in connection parts (tongue 55, housing 56, pins 57, recesses 58).

9. A drive device according to one of the preceding Claims, **characterised in that** the electrical circuit arrangement (51) is separably connected by plug-in contact pairs (plug contacts 61, socket contacts 63) to connection terminals (62) on the electrical motor (22).

10. A drive device according to Claims 8 and 9, **characterised in that** in each case one of the contacts (socket contact 63) of the plug-in contact pairs is connected to the circuit board (53) to supply current to the electric motor (22).

11. A drive device according to one of Claims 8 to 10, **characterised in that** the circuit board (53) carries at least one socket (65,83,84) for a plug-in connection of the electrical circuit arrangement (51) to external modules.

12. A drive device according to one of the preceding Claims, **characterised in that** to actuate the switching means (52), a ratchet wheel (73) is provided which, upon displacement of the part (10) between its extreme positions, is caused by an eccentric toothed gearing (74) to perform a rotary movement of less than 360° and **in that** the ratchet wheel (73) is likewise accommodated in the electric housing part (35, 35') together with the eccentric toothed gearing (74).

## Revendications

1. Dispositif d'entraînement d'une partie de véhicule réglable entre deux positions de fin de course, notamment le panneau (10) d'un toit de véhicule, comprenant
• un moteur électrique (22) relié par un démultiplicateur (23) à un pignon d'entraînement (20) porté par un axe de sortie (26), ce pignon étant lui-même relié à la partie réglable par une liaison d'entraînement,
• ainsi qu'une installation électrique (51) munie d'une installation de commutation (52) pour commander le moteur et pour arrêter le moteur électrique (22) dans au moins une position prédéterminée de la partie réglable,
**caractérisé en ce que**
le démultiplicateur (23) et le circuit électrique (51) sont logés dans une partie de boîtier de transmission (30) ou une partie de boîtier électrique (35, 35'), particulier, reliés de manière amovible et recouverts par un couvercle commun (44, 44'), la partie de boîtier de transmission (30) étant une pièce en métal injecté et la partie de boîtier électrique (35, 35') étant une pièce en matière plastique injectée.

2. Dispositif d'entraînement selon la revendication 1,
**caractérisé en ce que**
le moteur électrique (22) est fixé par des brides à la partie de boîtier de transmission (30).

3. Dispositif d'entraînement selon l'une des revendications précédentes,
**caractérisé en ce que**
des éléments de fixation (48, 49, 50) pour monter le dispositif d'entraînement (21) sur le véhicule ou sur une partie solidaire du véhicule et soutenant la partie réglable sont seulement prévus sur la partie de boîtier de transmission (30).

4. Dispositif d'entraînement selon l'une des revendications précédentes,
**caractérisé en ce que**
le couvercle commun (44, 44') est relié de manière amovible notamment par clipsage à la partie de boîtier de transmission (30) et à la partie électrique (35, 35').

5. Dispositif d'entraînement selon la revendication 4,
**caractérisé en ce que**
la partie de boîtier (44, 44') porte des languettes (45) qui peuvent être écartées élastiquement, et être encliquetées dans des supports antagonistes (becs 47) de la partie de boîtier de transmission (30) et de la partie de boîtier électrique (35, 35').

6. Dispositif d'entraînement selon l'une des revendications précédentes,
**caractérisé en ce que**
pour relier de manière réciproque amovible la partie de boîtier de transmission (30) et la partie de boîtier électrique (35, 35') ces parties comportent des pièces de liaison par enfichage (languettes 36, 37, 43 ; logements 38, 25 39, 40 ; bras 41) ces pièces étant notamment moulées sur les parties.

7. Dispositif d'entraînement selon la revendication 6,
**caractérisé en ce qu'**
au moins l'une des pièces de liaison par enfichage (bras 41) du boîtier de transmission (30) est appuyée pour soutenir la partie de boîtier électrique (35, 35') contre au moins une paroi latérale et/ou frontale (42, décrochement 64) de la partie de boîtier électrique, selon une grande surface et à partir de l'intérieur.

8. Dispositif d'entraînement selon l'une des revendications précédentes,
**caractérisé en ce qu'**
au moins une partie des composants du circuit de commutation électrique (51) est montée sur une plaque de circuit imprimé (53) elle-même reliée de manière amovible à la partie de boîtier électrique (35, 35') de préférence par des pièces de liaison par enfichage (languette 55, logement 56, broche 57, cavité 58).

9. Dispositif d'entraînement selon l'une des revendications précédentes,
**caractérisé en ce que**
le circuit électrique (51) est relié de manière amovible aux bornes de raccordement (62) du moteur électrique (22) par des paires de contacts enfichables (fiche de contact 61, douille de contact 63).

10. Dispositif d'entraînement selon les revendications 8 et 9,
**caractérisé en ce que**
chaque fois l'un des contacts (douille de contact 63), des paires de contact enfichables sont fixées à la plaque de circuit imprimé (53) pour l'alimentation électrique du moteur électrique (22).

11. Dispositif d'entraînement selon l'une des revendications 8 à 10,
**caractérisé en ce que**
la plaque de circuit imprimé (53) est munie d'au moins une douille (65, 83, 84) pour la liaison par enfichage du circuit électrique (51) à des ensembles extérieurs.

12. Dispositif d'entraînement selon l'une des revendications précédentes,
**caractérisé par**
une roue de commutation (73) pour actionner l'installation de commutation (52), et qui lors du déplacement de la partie (10) entre ses positions de fin course exécute un mouvement de rotation inférieur à 360° sous l'effet d'une transmission à roue dentée excentrée (74) et en ce que la roue de commutation (73) est logée avec la transmission de roue dentée excentrée (74) également dans la partie de boîtier électrique (35, 35').
